# EUROPEAN PATENT SPECIFICATION

(11) **EP 2 784 309 B1**
(45) Date of publication and mention of the grant of the patent: **17.07.2019**
(21) Application number: 13382122.3
(22) Date of filing: 28.03.2013
(51) Int. Cl.: F03D 15/00, F03D 80/70

(54) **Methods for reducing drive train oscillations in a wind turbine**
Verfahren zur Reduzierung der Antriebsstrangschwingungen in einer Windturbine
Procédés de réduction des oscillations de chaîne dynamique dans une éolienne

(43) Date of publication of application: 01.10.2014
(73) Proprietor: GE Renewable Technologies Wind B.V., 4817 PA Breda (NL)
(72) Inventor: Colom Quetglas, Miquel Àngel, 25004 LLEIDA (ES); Bergua, Roger, 08017 BARCELONA (ES); Casanovas Bermejo, Carlos, 08005 Barcelona (ES)
(74) Representative: ZBM Patents - Zea, Barlocci & Markvardsen

(56) References cited:
- EP-A1- 1 855 001
- EP-A1- 2 372 150
- EP-A1- 2 372 151
- WO-A1-2011/120721
- WO-A1-2012/007185
- US-A- 4 757 211

## Description

The present invention relates to methods for reducing drive train oscillations in a wind turbine.

### BACKGROUND

Modern wind turbines are commonly used to supply electricity into the electrical grid. Wind turbines of this kind generally comprise a rotor with a plurality of blades. The rotor with the blades is set into rotation under the influence of the wind on the blades. The rotation of the rotor shaft either directly drives the generator rotor ("directly driven") or through the use of a gearbox.

During normal operation, the rotational speed of the wind turbine is controlled by the electromagnetic torque acting on the generator and the aerodynamic torque acting on the rotor. Additionally, mechanical braking systems may be foreseen.

The combination of rotor, rotor shaft (if present), gearbox (if present) and generator is usually referred to as the "drive train" of a wind turbine. In a direct drive wind turbine, the drive train may thus consist only of the rotor and the generator. And in the case of wind turbines with a gearbox, the drive train may include the rotor, possibly a rotor shaft, a gearbox and the generator.

Various types of generators are further known for use in wind turbines. For example, the use of Squirrel Cage Induction Generators (SCIG) is known and has been widely used in the past. SCIG are induction generators comprising essentially a cylindrical laminated rotor core with longitudinal conductive bars. Additionally, wound rotor induction generators (WRIG), especially when used in the form of doubly-fed induction generators (DFIG), are also widely applied in modern wind turbines. Other types of induction generators are also known.

Synchronous electrical generators are also known. For example, the use of Wound Rotor Synchronous Generators (WRSG) is known. In WRSG, electromagnets, usually fed with a DC source, are arranged on the rotor surface to generate a magnetic field.

Alternatively Permanent Magnet Synchronous Generators (PMSG) having a rotor carrying permanent magnets to generate the magnetic field can also be used in wind turbines. They are generally deemed to be reliable and require less maintenance than other generator topologies. For offshore wind turbines, direct drive systems employing permanent magnets are generally regarded as preferable. However, the use of permanent magnet generators is not limited to these kinds of applications.

One particular problem that may arise in permanent magnet generators and that does not occur in other types of generators is related to a short circuit in the stator of the generator. In induction generators, such as DFIG generators, or in wound rotor synchronous generators, which have electromagnets in the form of coils on the rotor, the electrical supply to the rotor can be easily interrupted in case of such a short-circuit in the stator. As a result, the magnetic field of the rotor disappears and the generator's operation can be stopped in a relatively easy manner as compared to generators having permanent magnet rotors, since the magnetic field generated by the permanent magnets cannot be eliminated.

In case of a short circuit in a permanent magnet generator, the control of the currents in the stator coils naturally disappears, but there is no readily available way to get rid of the magnetic field of the rotor since it relies on the use of permanent magnets. As the permanent magnet rotor rotates, its magnetic field will cause an electromotive force and thereby currents in the stator. These currents in the stator will depend on the impedance of the stator windings and the induced electromotive force. Both the impedance of the stator and the induced electromotive force depend on the rotational speed of the rotor. After detection of such an event, an operation to stop the wind turbine, e.g. by pitching the blades, can be initiated, so that the speed of the rotor is reduced until complete stop is reached. Nevertheless, as large inertias are involved, said braking of the rotor is quite a slow process.

These uncontrolled currents in the stator will provoke a torsional oscillatory load on the rotor. With a higher rotational velocity, the torsional load will generally be higher as induced currents, which are related to the magnetic flux variation with time, will also be higher.

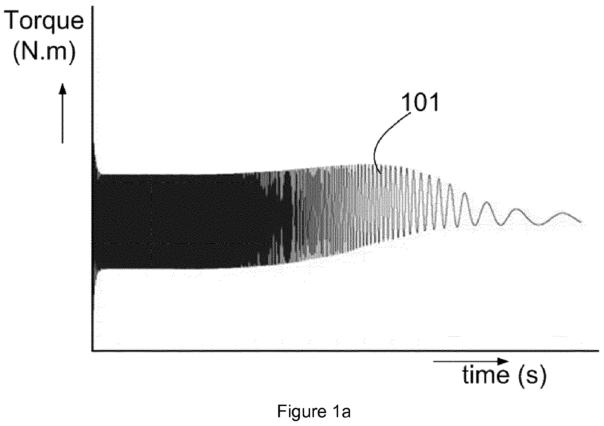

The resulting torsional load on the generator rotor may be illustrated with reference to figure 1a. When a short circuit occurs, the before described uncontrollable currents in the stator will be generated, which in turn cause an oscillating torsional load on the drive train. The amplitude of the torsional load would, absent of other influences, very slowly decrease, as it is directly dependent on the frequency of the oscillation which in turn depends on the rotational speed of the generator rotor. In figure 1a, a substantially sinusoidal curve 101 is shown, which illustrates the development of torque (N.m) over time (s). It may be seen that the frequency of the oscillatory load slowly reduces, and therewith the intensity.

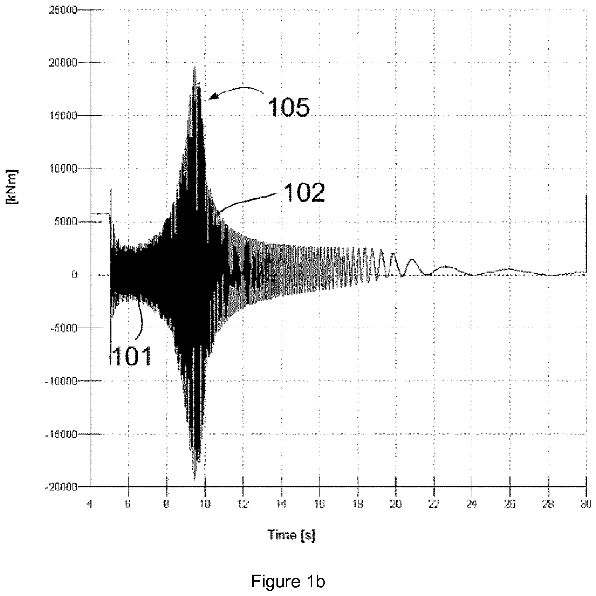

However, in some wind turbines, the torsional natural frequency (or "characteristic frequency", also sometimes referred to as "eigenfrequency" or "resonance frequency") may lie below the excitation frequency in case of a short circuit which not only depends on rotational frequency of the rotor but also on specific details of the electrical generator design such as magnet and pole arrangement. As the rotor very slowly reduces its speed, the frequency of the torsional load will be reduced in a very slow manner as well. Inevitably, if a torsional natural frequency of the drive train lies below the initial excitation frequency, at some point the excitation frequency will coincide with a resonance frequency of the drive train. The drive train may thus enter in resonance, which may result in extreme loads, as may be observed in figure 1b.

In figure 1b, the same curve 101 (from figure 1a) is shown again (although it is hardly visible since it is "hidden" behind the other curve). Curve 101 again represents the loads as generated in the generator, i.e. the input loads. Curve 102 represent the resulting torsional loads in the drive train, i.e. the resulting output loads. As the oscillatory load 101 comes close to the natural frequency of the drive train, resonance may occur. Reference sign 105 is used to indicate this area of resonance, in which the loads dramatically increase.

The conventional solution to this problem is to incorporate fuses or circuit breakers that avoid the currents in the stator windings caused by the permanent magnets after e.g. a short circuit. However, one problem related to such a solution is that it may be expensive and complicated to incorporate such fuses etc., particularly in the case of large generators. It may even be that in some generators, the circuitry involved in generators becomes so complex that the unwanted currents cannot completely be avoided. Particularly large generators may be used in direct drive wind turbines.

Another solution to this problem may be to increase the stiffness of the drive train in such a manner that the natural frequency of the drive train lies significantly above the potential excitation frequencies of the loads in the generator. However, this sort of solution may deteriorate the performance of the drive train and the wind turbine during normal operation.

In examples of the present invention, at least some of the aforementioned problems are at least partially resolved.

### SUMMARY

According to a first aspect of the invention, a method for reducing torsional oscillations in a drive train of a wind turbine according to claim 1 is provided. The drive train of the wind turbine includes a rotor with one or more blades, a permanent magnet generator, and an adjustable coupling. In accordance with this aspect, the method comprises changing the torsional stiffness of the adjustable coupling so as to change the torsional natural frequency of the drive train.

In examples according to this first aspect, instead of tackling the problem electrically, the consequences of the problem are reduced in a structural or constructional manner. Various wind turbines are known that incorporate some form of coupling in their drive train e.g. in order to reduce the transmission of bending loads. These coupling may be relatively flexible. In some cases, the coupling may be adjustable. In accordance with this first aspect, the already existing adjustable coupling is used to avoid resonance in the drive train and thus avoid the possibly destructive loads. The methods thus provide an alternative solution to a problem of permanent magnet generators that may be simpler and cheaper than existing solutions.

The torsional oscillations related to the invention are caused by a short circuit in a stator of the permanent magnet generator. The short circuit may e.g. be a two phase short circuit or a three phase short circuit. Possibly, the torsional oscillations may also be caused by another technical problem in the generator.

In some examples not falling under the scope of the present invention, changing the torsional stiffness of the adjustable coupling may comprise decreasing the torsional stiffness of the adjustable coupling. By decreasing the torsional stiffness of the adjustable coupling, it may be ensured that resonance only occurs at lower frequencies. At lower frequencies, the amplitude of the torsional load will be lower as well, so that the problem may be sufficiently resolved.

In some examples, changing the torsional stiffness of the adjustable coupling comprises decreasing the torsional stiffness of the adjustable coupling at a first instance, and increasing the torsional stiffness of the adjustable coupling at a second instance. In these examples, the danger of resonance may be completely avoided. In a first instance, the torsional stiffness may be reduced. As the generator rotor slows down, at some point inevitably, the frequency of excitation will coincide with the new torsional natural frequency of the drive train. At that instance (or shortly before that), the torsional natural frequency may be increased again, so that resonance may effectively be avoided.

In yet further examples, changing the torsional stiffness of the adjustable coupling comprises increasing the torsional stiffness of the adjustable coupling. In these cases, the torsional stiffness may be increased substantially immediately after detection of the problem. By sufficiently increasing the stiffness, the torsional natural frequency of the drive train may be sufficiently above the excitation frequency so that resonance cannot occur.

In some examples, the adjustable coupling may comprise flexible elements and one or more hydraulic chambers in the flexible elements to adjust the stiffness of the flexible elements. In these examples, increasing the pressure in the hydraulic chambers, the coupling (and thereby the drive train as a whole) may be rendered more rigid. Similarly, decreasing the pressure in the hydraulic chambers may render the coupling more flexible.

In all these examples, the adjustable coupling may be arranged at any suitable location in the drive train. For example, the adjustable coupling may be arranged between the rotor (e.g the rotor hub) and the rotor shaft. In another example, the adjustable coupling is arranged between a first part of the rotor shaft and a second part of the rotor shaft. In some known wind turbines a flexible coupling is arranged between two parts of the rotor shaft in order to reduce the transmission of loads other than torsion from one part of the rotor shaft to the other. In yet another example, for example in a direct drive wind turbine, the adjustable coupling may be arranged between the rotor and the generator rotor. Such a coupling may sometimes be provided to reduce air gap variations in the generator.

In another aspect not falling under the scope of the present invention, a wind turbine comprising a drive train including a rotor with one or more blades, a permanent magnet generator, and an adjustable coupling is provided. The adjustable coupling comprises one or more flexible elements and one or more hydraulic chambers in the flexible elements, and one or more overpressure valves to release hydraulic fluid from the hydraulic chambers.

In this aspect, no active control of the adjustable coupling is required to avoid a possible resonance situation. When resonance starts to occur, the loads on the coupling increase. When these loads reach a sufficient magnitude, the overpressure valve opens automatically draining the hydraulic fluid from one or more of the chambers. By draining the hydraulic fluid, the flexibility of the coupling increases and the torsional natural frequency is lowered instantly. Further resonance and a corresponding increase of loads can be avoided in a particularly simple manner.

Additional objects, advantages and features of examples of the present invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figures 1a and 1b schematically illustrate possible torsional loads on a drive train of a wind turbine having a permanent magnet generator;
Figures 2a - 2f schematically illustrate various examples of drive trains with adjustable flexible couplings which may be used in embodiments of the present invention; and
Figures 3a - 3c schematically illustrate various examples of methods of reducing torsional oscillations.

### DETAILED DESCRIPTION

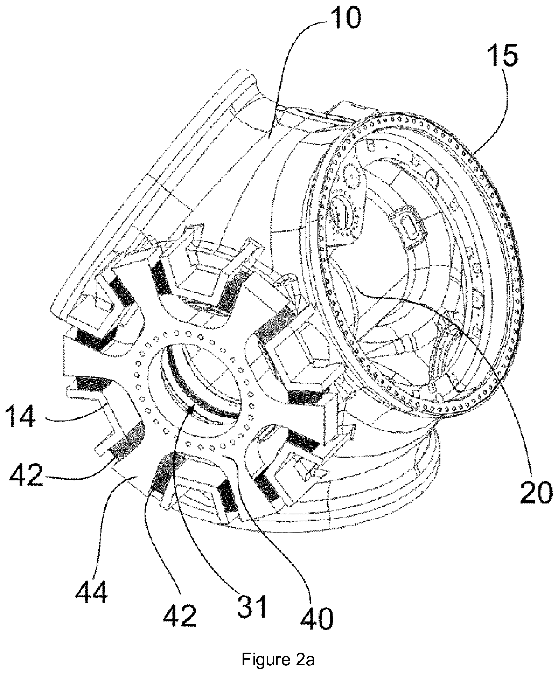

Figure 2a schematically illustrates a first example of a drive train configuration of a wind turbine. Hub 10 is rotatably mounted on frame 20. Frame 20 may extend away from a wind turbine tower (not shown) and the hub 10 may be rotatable about a distal end of the frame. The hub carries a plurality of blades (not shown) which may be mounted in blade root fittings 15.

In this example, the hub comprises a number of protrusions 14 arranged at a front portion of the hub. In the particular example shown in figure 2a, six protrusions were provided, this number may be freely varied.

A centre piece 40 may be mounted on a rotor shaft (not shown) through e.g. welding, a bolted connection, an interference fit or in yet other ways. The rotor shaft may be provided in the central opening 31 of centre piece 40. In this example, six substantially radially extending spokes 44 are provided on centre piece 40, and twelve flexible elements 42 connect the spokes 44 to the protrusions 14. The rotor shaft may be connected directly to the generator rotor, or may be the input shaft of a gearbox.

The arrangement of the flexible elements may ensure that substantially only torque is transmitted from the rotor (hub) to the rotor shaft. As the flexible elements may be more yielding in an axial direction, loads in this direction are not or much less transmitted to the rotor shaft, but rather to the frame on which the hub is mounted.

The flexible elements may be adjustable and may comprise an elastomeric material and optionally layers of a metallic material. The stiffness of the flexible elements may be adjusted through a hydraulic circuit pushing more or less on the elastomeric material. A hydraulic chamber may be arranged within each of the flexible elements.

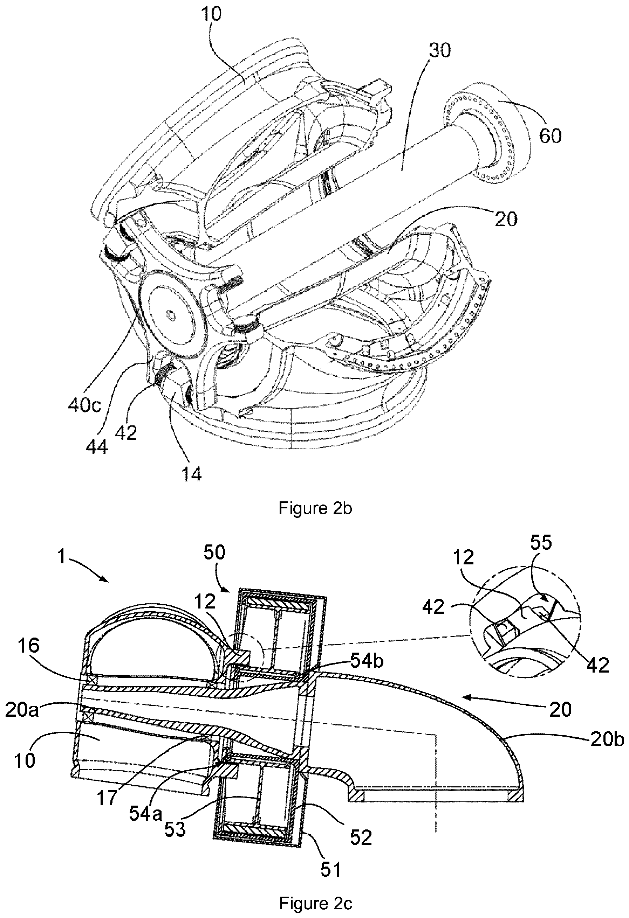

Figure 2b illustrates another drive train configuration of a wind turbine. A hub 10 is connected to a rotor shaft 30. The rotor shaft 30 in this example is connected to a first stage of a gearbox. Reference sign 60 is used to indicate this connection. Similarly to the embodiment of figure 2a, centre piece 40c carries substantially radially extending spokes. In the illustrated example, a centre piece with three pairs of spokes 44 is shown.

Each pair of spokes defines a space in between them. Each protrusion 14 on the hub is connected to such a pair of spokes using relatively flexible elements 42. A notable difference with the embodiment of figure 2a is that the centre piece 40c does not comprise annular segments connecting the spokes. The relatively flexible elements 42 may have the same objective as before, namely reduced transmission of bending loads to the rotor shaft.

Figure 2c illustrates a drive train configuration of a direct drive wind turbine. Wind turbine 1 comprises a hub 10 carrying a plurality of blades (not shown). The roots of the blades are directly attached at the hub. Hub 10 is rotatably mounted on a front frame 20a through suitable bearings 16 and 17. A generator 50 is also mounted upon the front frame 20a. The generator 50 comprises a generator stator 52 and a generator rotor 53, arranged within generator housing 51. Generator rotor 53 is rotatably mounted with respect to the generator stator through bearings 54a and 54b. Front frame 20a is further connected to a rear frame 20b, which may be rotatably mounted on top of the wind turbine tower (not shown).

In this example, hub 10 comprises a plurality of protrusions 12 integrally formed with the hub. The generator rotor 53 comprises permanent magnets, which are carried by carrying structure 55. The protrusions 12 extend into the generator 50 and are connected to the generator rotor's carrying structure 55 through relatively flexible elements 42. In figure 2c, a detailed view of this connection is also shown. A single protrusion has a double-sided connection to the carrying structure 55 of the generator rotor by two flexible elements 42.

The arrangement of the flexible elements ensures that the transmission of bending loads from the hub to the generator is reduced. The flexible elements namely allow a relative displacement between the rotor hub and the generator rotor. In this embodiment shown, the relative displacement may be mostly in the axial direction, but also very slightly in the circumferential direction.

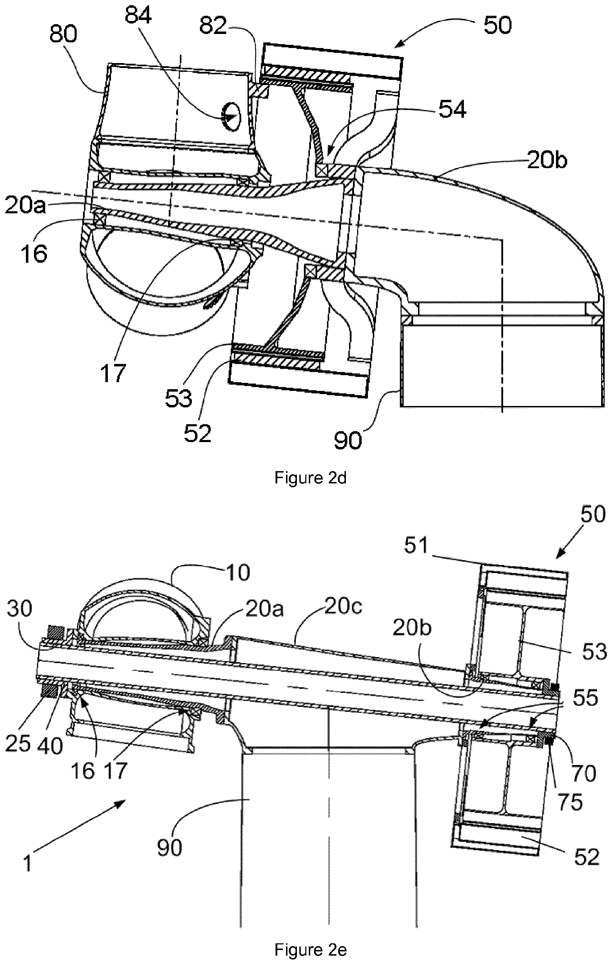

Figure 2d illustrates yet a further direct drive train configuration with an adjustable (flexible) coupling. As in figure 2c, a rear frame 20b is rotatably mounted on a wind turbine tower 90. A front frame 20a is connected to this rear frame 20b. The hub 10 is rotatably mounted about a distal end of frame 20.

In this example, the hub carries a plurality of extenders 80. An extender is an element that serves to increase the rotor diameter without increasing the rotor blade length. The roots of the blades are thus mounted in the extenders, not directly in the hub. In this example, protrusions 82 extend from the extender 80 into the generator rotor. These protrusions may be formed integrally with the extenders or may be separate components attached to the extender. A similar coupling involving very similar elements between rotor and generator rotor as described before with reference to figure 2c.

Figure 2e schematically illustrates yet another example of a drive train of a direct drive wind turbine in which examples of the present invention may be used. Wind turbine 1 comprises a tower 90, upon which frame 20 is mounted. In this example, frame 20 comprises a front part 20a, a middle part 20c, and a rear part 20b. Hub 10 carries a plurality of blades (not shown) and is rotatably mounted with two bearings 16, 17 upon the frame's front part 20a.

Hub 10 is connected to shaft 30 through coupling element 40. Coupling element 40 is designed such that it substantially transmits torque from the rotor hub 10 to shaft 30, while substantially limiting the transfer of other loads and may be arranged on shaft 30 through a shrink disc 25. It will be clear that coupling element 40 may take various suitable forms as illustrated e.g. in figures 2a and 2b.

It may be seen in figure 2e that shaft 30 extends internally of frame 20. A second coupling element 70 is provided which transmits the torque from shaft 30 to the generator rotor 53, while simultaneously limiting the transfer of other loads. The second coupling may be similar to the first coupling in the sense that substantially only torque is transmitted.

Generator rotor 53 is mounted on frame 20b through suitable bearings 55. The generator stator 52 is radially arranged outside the generator rotor 53. Generator housing 51 is provided for protection from weather influences. Due to the first and second couplings, the transfer of any load other than torque from the hub to the generator is substantially avoided. Since bending loads and accompanying deformations are not transferred, the air gap between generator rotor and stator can be maintained relatively stably.

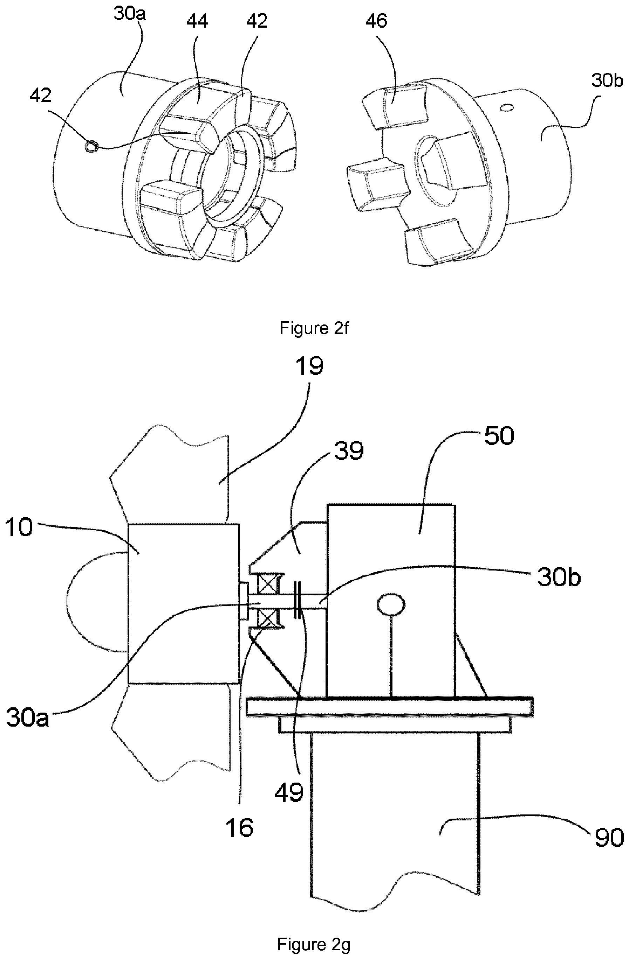

Figure 2f schematically illustrates a shaft-to-shaft coupling which may be used in a rotor shaft of a wind turbine. Generally the objective of such a coupling is to reduce the transmission of bending loads from one portion of the rotor shaft to the other. A shaft portion 30a may be coupled to a shaft portion 30b. Each of the shaft portions may comprise a plurality of protrusions 44 and 46 respectively. The coupling of the shaft portions is established through relatively flexible elements 42.

With reference to figure 2g, another drive train configuration will be explained. In this example, a hub 10 with a plurality of blades 19 is shown. The hub is coupled to a rotor shaft 30 and the rotor shaft is rotatably mounted through a "main" bearing 16 in bearing support 39.

An adjustable coupling 49 may be provided between a forward portion 30a of the rotor shaft that is connected with the hub 10, and a rearward portion 30b of the rotor shaft which leads to the generator 50. In this example, the transmission of bending loads from the hub to the rotor shaft can hardly be avoided. In order to reduce bending loads and deformations in the generator 50, an adjustable coupling 49 may be provided which may be similar to the coupling illustrated in figure 2f. This sort of coupling aims to reduce the transmission of loads other than torque.

In all the illustrated examples of drive train configurations, at least one relatively flexible coupling may be provided at some point of the drive train. Additional examples of drive train configurations with suitable couplings are disclosed in e.g. WO 2011/120720, WO 2011/120721 and WO 2012/007185. In accordance with examples of the present invention, the coupling is adjustable. The coupling may comprise a plurality of flexible elements. The adjustable coupling may further comprise a hydraulic circuit including a hydraulic chamber in one or more of the flexible elements. By increasing the hydraulic pressure in the chambers of the flexible elements, these elements may be rendered stiffer. Similarly, by decreasing the hydraulic pressure in the chambers of the flexible elements, these elements may be rendered more flexible or "lenient".

The hydraulic circuit may thus be used to adjust the stiffness of the couplings in any of the illustrated drive train configurations and thereby the natural frequency of the drive train may be changed as well.

Particularly in the case of direct drive wind turbines, the natural frequency of the drive train may be lower than the excitation frequency of the loads generated in a permanent magnet generator in case of an electrical problem in which control over the currents in the stator windings is lost. Such an electrical problem may typically be a two-phase or three-phase short circuit. However, the problem is not limited to these two specific examples. It is possible that the generator is not a three-phase system (as is usually the case), but instead has a different number of phases.

In one example, a hydraulic circuit may comprise overpressure valves, which open automatically when a certain pressure in the hydraulic chambers is reached. When resonance occurs, the loads on the coupling will increase. At a certain load, the pressure within one or more of the hydraulic chambers may reach a predefined level, which automatically leads to the opening of one or more release valves, so that hydraulic fluid may be released from the adjustable coupling and the torsional natural frequency of the drive train may be reduced. Alternatively, a control system that opens the overpressure valves upon detection of a problem in the generator may be used.

By significantly lowering the natural frequency of the drive train, resonance may still occur as the rotor slows down. However, resonance may only occur when the excitation loads are relatively small.

In other examples, the hydraulic circuit may include a deposit of hydraulic fluid and a system for injecting and/or draining hydraulic fluid from one or more of the hydraulic chambers. Such a system may include one or more pumps and one or more valves.

One possible method is to inject hydraulic fluid in the adjustable coupling substantially immediately after detection of the problem in the generator. By injecting hydraulic fluid from a deposit into the flexible elements, the resulting torsional frequency may be increased to a value above the excitation frequency. The potential problem of resonance may thus be effectively avoided.

Another possible solution is to drain hydraulic fluid from one or more of the hydraulic chambers of the flexible elements and divert this fluid to a deposit. As the rotor slows down and the excitation frequency gets closer to the new natural frequency, the hydraulic fluid may be injected again from the deposit into one or more of the hydraulic chambers of the flexible elements.

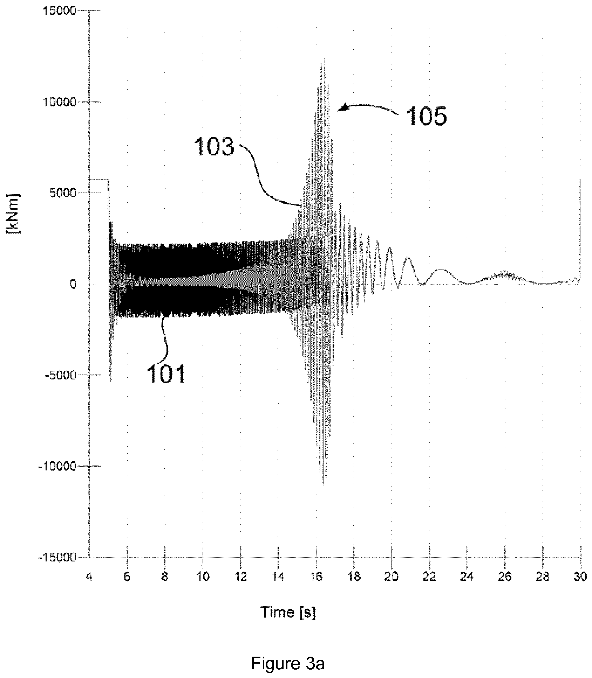

Figures 3a - 3c schematically illustrate various examples of methods of reducing torsional oscillations. In figure 3a, the sinusoidal curve 101 illustrates the loads as generated in the generator. This is the same curve as the curve 101 shown in figures 1a and 1b. In this example, upon occurrence of a short circuit in the generator, the natural frequency of the drive train is lowered, e.g. by releasing hydraulic fluid from the couplings as hereinbefore described.

The result is that, in comparison with the situation of figure 1b, resonance 105 is reached later. This is because of the lowering of the natural frequency of the drive train. As the input frequency (or "excitation frequency") slowly decays, it takes more time to reach the natural frequency of the system. As the input loads also slowly decrease, the resulting loads at resonance are also smaller than in the situation of figure 1b. In figure 1b, the maximum loads reached may be approximately 20 kN.m, whereas in this example of the invention, the maximum loads reached may be approximately 12 kN.m.

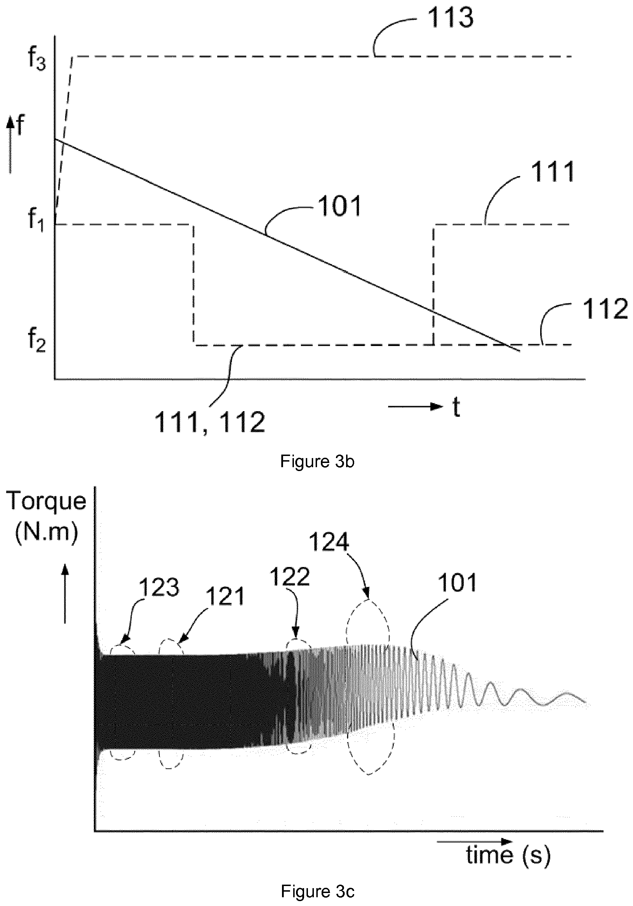

Figure 3b illustrate various examples of methods of reducing torsional oscillations. The input load 101 is represented by curve 101. Note that in this case, the development of the frequency of the load 101 over time is shown. The natural frequency of the drive train in a default situation is assumed equal to f1. Naturally, if the frequency of the input load were to reach the frequency f1, resonance could occur.

A first method of reducing torsional oscillations is indicated by reference sign 113: as soon as a short circuit is detected in the generator, the natural frequency of the drive train is increased from f1 to f3. This may be done by injecting hydraulic fluid in any of the couplings described before.

The result is that even though the input frequency and the natural frequency cross paths, this happens so quickly that high loads in resonance can be avoided.

An alternative method of reducing torsional oscillations is indicated by reference sign 112: the natural frequency of the drive train is lowered from frequency f1 to f2before resonance is reached. This may be done by reducing the hydraulic fluid in the couplings. Eventually, a situation of resonance may occur, but since the input loads by then have decreased, the resulting output loads on the system are not necessarily problematic.

Yet another alternative method of reducing torsional oscillations is indicated by reference sign 111: as in the case of 112, the natural frequency of the drive train is lowered from f1 to f2 before resonance is reached. In this case however, before reaching resonance at frequency f2, the natural frequency is increased again. Even though the input frequency and the natural frequency cross paths, this may happen so quickly that high loads can be avoided.

A way to achieve this would be to remove hydraulic fluid from the couplings substantially as hereinbefore described, and later again inject hydraulic fluid in the couplings. A deposit for hydraulic fluid could be arranged with the couplings to temporarily store the fluid. In a further variation on the method indicated by reference sign 111, after lowering the frequency from f1 to f2, the frequency may be raised again, but not necessarily to f1. A frequency that is lower than f1 may also be chosen. Such a frequency may be more easily reached as less hydraulic fluid would need to be injected. As long as the frequency is sufficiently above the input frequency at the time, high loads may be effectively avoided.

Also, both for the examples 111 and 112, a further variation may be that the drive train natural frequency is reduced well before the input frequency gets close to the natural frequency. When a passive overpressure valve is used, the valve opens only when predetermined loads corresponding to "almost resonance" are reached. However, when other hydraulic systems with more active control are used, the natural frequency could be lowered as soon as a problem in the generator is detected.

Figure 3c schematically illustrates the resulting loads that may occur in each of the methods 111, 112 and 113. Curve 101 once again represents the same input load. With the example of 113, a small peak 123 in loads may occur relatively soon as the natural frequency of the system is increased. Since the natural frequency is changed relatively rapidly, resonance can be avoided.

With the example of 111, a first peak in loads 121 may occur as the excitation frequency comes close to the natural frequency. Higher loads are avoided since at that point, the natural frequency is lowered. A second peak in loads 122 may occur as the natural frequency is increased again, and for a brief moment substantially coincides with the input frequency.

Finally, with the example of 112, the same first peak 121 in loads may occur as in the example of 111. The first part of the actuation is namely the same. In this example however, the natural frequency is not increased again, so that eventually resonance may occur with a corresponding peak 124 in loads. As mentioned before, the resulting loads may not be necessarily problematic, since at this lower frequency, the amplitude of the loads will have decreased.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A method for reducing torsional oscillations in a drive train of a wind turbine caused by a short circuit in a stator of a permanent magnet generator, the drive train of the wind turbine including a rotor with one or more blades, the permanent magnet generator, and an adjustable coupling (49),
the method comprising changing the torsional stiffness of the adjustable coupling (49) so as to change the torsional natural frequency of the drive train, by increasing the torsional stiffness of the adjustable coupling.

2. A method according to claim 1, wherein the adjustable coupling (49) is arranged between a rotor and a rotor shaft (30).

3. A method according to claim 1, wherein the adjustable coupling (49) is arranged between a first part of the rotor shaft (30) and a second part of the rotor shaft (30).

4. A method according to claim 1, wherein the adjustable coupling (49) is arranged between a rotor and a generator rotor.

5. A method according to any of claims 1 - 4, wherein the wind turbine is a direct drive wind turbine.

6. A method according to any of claims 1 - 5, wherein the adjustable coupling (49) comprises flexible elements (42) and one or more hydraulic chambers in the flexible elements (42) to adjust the stiffness of the flexible elements (42).

7. A method according to claim 6, wherein changing the torsional stiffness of the adjustable coupling (49) comprises
injecting hydraulic fluid into the hydraulic chambers.

## Patentansprüche

1. Ein Verfahren zur Reduzierung der Drehschwingungen eines Antriebsstrangs von einer Windturbine, die durch einen Kurzschluss in einem Stator von einem Dauermagnetgenerator entstehen, wobei der Antriebsstrang der Windturbine einen Rotor mit einem oder mehreren Blättern, den Dauermagnetgenerator und eine einstellbare Kopplung (49) umfasst,
wobei das Verfahren folgendes umfasst: das Verändern der Drehsteifigkeit der einstellbaren Kopplung (49), um die Dreheigenfrequenz des Antriebsstrangs zu verändern, in dem die Drehsteifigkeit der einstellbaren Kopplung erhöht wird.

2. Ein Verfahren nach Anspruch 1, wobei die einstellbare Kopplung (49) zwischen einem Rotor und einer Rotorwelle (30) angeordnet ist.

3. Ein Verfahren nach Anspruch 1, wobei die einstellbare Kopplung (49) zwischen einem ersten Teil der Rotorwelle (30) und einem zweiten Teil der Rotorwelle (30) angeordnet ist.

4. Ein Verfahren nach Anspruch 1, wobei die einstellbare Kopplung (49) zwischen einem Rotor und einem Generatorrotor angeordnet ist.

5. Ein Verfahren nach einem der Ansprüche 1 - 4, wobei die Windturbine eine Direktantriebswindturbine ist.

6. Ein Verfahren nach einem der Ansprüche 1 - 5, wobei die einstellbare Kopplung (49) flexible Elemente (42) und eine oder mehrere hydraulische Kammern in den flexiblen Elementen (42) zur Einstellung der Steifigkeit der flexiblen Elementen (42) umfasst.

7. Ein Verfahren nach Anspruch 6, wobei das Verändern der Drehsteifigkeit der einstellbaren Kopplung (49) das Einspritzen von einer Hydraulikflüssigkeit in die hydraulischen Kammern umfasst.

## Revendications

1. Un procédé de réduction des oscillations de torsion dans une chaîne cinématique d'une éolienne dues à un court-circuit dans un stator d'un générateur à aimant permanent, la chaîne cinématique de l'éolienne incluant un rotor avec une ou plus pales, le générateur à aimant permanent, et un accouplement ajustable (49),
le procédé comprenant faire varier la raideur en torsion de l'accouplement ajustable (49) de façon à faire varier la fréquence naturelle de torsion de la chaîne cinématique, en augmentant la raideur en torsion de l'accouplement ajustable.

2. Un procédé selon la revendication 1, dans lequel l'accouplement ajustable (49) est disposé entre un rotor et un arbre de rotor (30).

3. Un procédé selon la revendication 1, dans lequel l'accouplement ajustable (49) est disposé entre une première partie de l'arbre de rotor (30) et une seconde partie de l'arbre de rotor (30).

4. Un procédé selon la revendication 1, dans lequel l'accouplement ajustable (49) est disposé entre un rotor et un rotor de générateur.

5. Un procédé selon l'une quelconque des revendications 1 - 4, dans lequel l'éolienne est une éolienne à entraînement direct.

6. Un procédé selon l'une quelconque des revendications 1 - 5, dans lequel l'accouplement ajustable (49) comprend des éléments flexibles (42) et une ou plusieurs chambres hydrauliques dans les éléments flexibles (42) pour ajuster la raideur des éléments flexibles (42).

7. Un procédé selon la revendication 6, dans lequel faire varier la raideur en torsion de l'accouplement ajustable (49) comprend injecter du fluide hydraulique dans les chambres hydrauliques.
